# EUROPÄISCHE PATENTSCHRIFT

(11) **EP 2 683 583 B1**
(45) Veröffentlichungstag und Bekanntmachung des Hinweises auf die Patenterteilung: **27.05.2015**
(21) Anmeldenummer: 12711758.8
(22) Anmeldetag: 05.03.2012
(51) Int. Cl.: B60T 1/10, B60T 17/02, B60K 6/12, F16D 61/00

(54) **VERFAHREN ZUR DRUCKSTEUERUNG IN EINEM FAHRZEUG SOWIE DRUCKSTEUEREINRICHTUNG**
METHOD FOR CONTROLLING PRESSURE IN A VEHICLE AND PRESSURE CONTROL DEVICE
PROCÉDÉ DE COMMANDE DE PRESSION DANS UN VÉHICULE ET DISPOSITIF DE COMMANDE DE PRESSION

(30) Priorität: 09.03.2011 DE 102011013440
(43) Veröffentlichungstag der Anmeldung: 15.01.2014
(73) Patentinhaber: WABCO GmbH, 30453 Hannover (DE)
(72) Erfinder: DIECKMANN, Thomas, 30982 Pattensen (DE); STUMBERG, Ingo, 30625 Hannover (DE); WIEHEN, Christian, 30938 Burgwedel (DE)
(74) Vertreter: Lauerwald, Jörg
(86) Internationale Anmeldenummer: PCT/EP2012/000979
(87) Internationale Veröffentlichungsnummer: WO 2012/119752

(56) Entgegenhaltungen:
- DE-A1- 19 600 910
- DE-A1-102010 033 539
- US-A1- 2010 095 661

## Beschreibung

Die Erfindung betrifft ein Verfahren zur Drucksteuerung in einem Fahrzeug mit pneumatischer Bremsanlage gemäß den weiteren Merkmalen des Anspruchs 1. Die Erfindung betrifft ferner eine Drucksteuereinrichtung gemäß dem Anspruch 16.

Aus der DE 196 00 910 A1 ist ein Verfahren zur Speicherung und Rückgewinnung von Bremsenergie bei Kraftfahrzeugen mit einem vom Fahrzeug angetriebenen Luftverdichter, einem Luftspeicher und einer Verbrennungskraftmaschine bekannt, wobei der nach dem Verdrängerprinzip arbeitende Luftverdichter von der im Schubbetrieb arbeitenden Verbrennungskraftmaschine angetrieben wird und im Normalbetrieb zur Aufladung dient. Zum Abbremsen des Fahrzeugs fördert dieser Luftverdichter durch ein Ventil über einen zur Kühlung vorgesehenen Wärmetauscher in den Luftspeicher. Die gespeicherte Luft wird bei Bedarf durch ein Ventil über einen weiteren zur Erwärmung vorgesehenen Wärmetauscher geleitet und einlassseitig dem Luftverdichter zugeführt, der mechanische Energie an die Verbrennungskraftmaschine abgibt, wobei die im Luftverdichter expandierte Luft der Verbrennungskraftmaschine zugeführt wird.

Ferner ist aus der US 2010/095661 A1 ein System bekannt, welches ungenutzte Energie, z.B. Wärmeenergie, zum Antrieb eines Fahrzeugs nutzt.

Der Erfindung liegt die Aufgabe zu Grunde, in einem Fahrzeug mit pneumatischer Bremsanlage unter möglichst weitgehender Verwendung vorhandener Komponenten den Energieverbrauch des Fahrzeuges beim Fahren zu senken und hierdurch zur Kraftstoffeinsparung beizutragen.

Die Aufgabe wird durch ein Verfahren gemäß Anspruch 1 gelöst. Hiernach sind zusätzlich zu einem ersten Druckluftexpansionsmodus wenigstens einer oder beide der folgenden Druckluftexpansionsmodi vorgesehen:
- In einem zweiten Druckluftexpansionsmodus wird in Expansionsphasen des Druckluftkompressors Druckluft aus einem zweiten druckluftspeichernden Behältnis in den Kompressionsraum des Druckluftkompressors geleitet.
- In einem dritten Druckluftexpansionsmodus wird in Expansionsphasen des Druckluftkompressors Druckluft aus einem dritten Druckluft speichernden Behältnis in den Kompressionsraum des Druckluftkompressors geleitet.

Die Aufgabe wird ferner durch eine Drucksteuereinrichtung gemäß dem Anspruch 16 gelöst.

Der Erfindung liegt die Erkenntnis zu Grunde, dass der in Fahrzeugen mit pneumatischer Bremsanlage vorgesehene Druckluftkompressor auch in einem Expansionsmodus betrieben werden kann, in dem Druckluft in Expansionsphasen in den Kompressionsraum des Druckluftkompressors geleitet wird. Bei einem Kolbenkompressor mit oberhalb des Kolbens liegendem Kompressionsraum liegt eine Expansionsphase vor, wenn sich der Kolben von einem oberen Totpunkt zu einem unteren Totpunkt hin bewegt. Während der Bewegung vom unteren Totpunkt zum oberen Totpunkt liegt eine Kompressionsphase vor, in der die im Kompressionsraum befindliche Luft verdichtet wird, wodurch Druckluft erzeugt wird. Wenn der Druckluftkompressor jedoch nicht zur Drucklufterzeugung betrieben wird, z.B. weil der oder die Druckluftspeicher ausreichend gefüllt sind, kann dem Druckluftkompressor in den Expansionsphasen dagegen Druckluft zugeführt werden, um dessen Bewegung in Richtung unterer Totpunkt zu unterstützen und hierdurch einen mit dem Druckluftkompressor gekoppelten Antriebsmotor des Fahrzeugs beim Antreiben des Fahrzeuges zu unterstützen.

Vorgeschlagen wird hiermit ein universell einsetzbares Verfahren, durch das sowohl in Schubphasen des Fahrzeugs durch den Druckluftkompressor erzeugte Druckluft auf Vorrat gespeichert werden kann, die dann in Phasen mit erhöhtem Antriebskraftbedarf zur Unterstützung des Antriebs des Fahrzeuges angefordert werden kann. Zusätzlich kann beim Betrieb des Fahrzeuges anfallende Abwärme, z. B. vom Antriebsmotor und dem Abgassystem, hinsichtlich der darin verfügbaren Energie zur weiteren Unterstützung des Antriebs des Fahrzeuges genutzt werden. Hierbei ist neben dem ersten Druckluftexpansionsmodus wenigstens der zweite oder der dritte Druckluftexpansionsmodus vorgesehen. Es können auch alle drei Druckluftexpansionsmodi vorgesehen sein. In diesem Fall kann eine maximale Energieeffizienz realisiert werden. Sofern sowohl der zweite als auch der dritte Druckluftexpansionsmodus vorgesehen sind, weist die Anlage sowohl das zweite als auch das dritte Druckluft speichernde Behältnis auf. Wenn nur der zweite Druckluftexpansionsmodus vorgesehen ist, kann die Anlage auch ohne das dritte Druckluft speichernde Behältnis realisiert sein. Wenn nur der dritte Druckluftexpansionsmodus vorgesehen ist, kann die Anlage auch ohne das zweite Druckluft speichernde Behältnis realisiert sein.

Allgemein gesagt ist ein Drucklufterzeugungsmodus dadurch gekennzeichnet, dass der Druckluftkompressor zur Drucklufterzeugung genutzt wird, wobei die erzeugte Druckluft in einem Druckluft speichernden Behältnis gespeichert wird und, falls erforderlich, zugleich auch für pneumatische Betätigungen z.B. von Bremszylindern genutzt wird. In einem Drucklufterzeugungsmodus wird in Kompressionsphasen des Druckluftkompressors erzeugte Druckluft von dem Kompressionsraum des Druckluftkompressors in ein Druckluft speicherndes Behältnis, z.B. in den Bremskreis-Druckluftbehälter geleitet.

Ein Druckluftexpansionsmodus ist dadurch gekennzeichnet, dass dem Druckluftkompressor in den Expansionsphasen Druckluft aus einem Druckluft speichernden Behältnis (erstes, zweites oder drittes Druckluft speicherndes Behältnis) zugeführt wird, um dessen Bewegung zu unterstützen, so dass der Druckluftkompressor wie ein Motor wirkt und mechanische Arbeit abgibt. Hierdurch kann z.B. ein mit dem Druckluftkompressor gekoppelter Antriebsmotor des Fahrzeugs beim Antreiben des Fahrzeuges unterstützt werden, so dass Kraftstoff eingespart werden kann. In einem Druckluftexpansionsmodus wird in Expansionsphasen des Druckluftkompressors Druckluft aus einem Druckluft speichernden Behältnis in den Kompressionsraum des Druckluftkompressors geleitet.

Das zweite und das dritte Druckluft speichernde Behältnis können als Druckluftbehälter ausgebildet sein. Vorteilhaft sind das zweite und/oder das dritte Druckluft speichernde Behältnis als zusätzliche Bauteile in dem Fahrzeug vorgesehen, die nicht Teile der pneumatischen Bremsanlage sind. Dies hat den Vorteil, dass das zweite und/oder das dritte Druckluft speichernde Behältnis auf seinen vorrangigen Anwendungszweck im zweiten oder dritten Druckluftexpansionsmodus hin optimiert sein können und nicht im Hinblick auf die Rahmenbedingungen der pneumatischen Bremsanlage hin ausgelegt sein müssen. So kann z.B. das zweite und/oder das dritte Druckluft speichernde Behältnis als Hochdruckbehälter ausgebildet sein, der für wesentliche höhere Druckniveaus als der Bremsdruck-Druckluftbehälter ausgelegt ist.

Wie erkennbar ist, handelt es sich bei dem ersten, dem zweiten und dem dritten Druckluft speichernden Behältnis jeweils um verschiedene Behältnisse, die verschiedene Druckkreise bilden und damit verschiedene hohe Drücke aufweisen können. Die Behältnisse können baulich aber zu einer oder mehreren Baueinheiten zusammengefasst sein. Das erste, zweite und/oder dritte Druckluft speichernde Behältnis kann jeweils auch durch pneumatische Zusammenschaltung mehrerer Einzel-Behältnisse gebildet sein.

Gemäß einer vorteilhaften Weiterbildung der Erfindung wird in einer ersten Schubphase im Betrieb des Fahrzeugs der Druckluftkompressor im ersten Drucklufterzeugungsmodus betrieben. Dies hat den Vorteil, dass in der Schubphase der Bremskreis-Druckluftbehälter mit Druckluft aufgefüllt wird, so dass für nachfolgende Druckluft-Entnahmevorgänge wieder mehr Druckluft zur Verfügung steht. Die Nutzung einer Schubphase zum Betrieb des Druckluftkompressors in einem Drucklufterzeugungsmodus hat den Vorteil, dass die ohnehin überschüssige Bewegungsenergie des Fahrzeugs sinnvoll für den Antrieb des Druckluftkompressors verwendet werden kann, ohne dass Energie aus dem Kraftstoff, der zum Betrieb des Antriebsmotors des Fahrzeuges dient, verbraucht werden muss. Eine Schubphase wird zum Beispiel erkannt, wenn der Fahrer das Fahrzeug verzögern will oder bei Bergabfahrt. Indiziert wird eine Schubphase zum Beispiel durch negative Werte des Motormoments des Antriebmotors, eine unbetätigte Gaspedalstellung oder eine betätigte Stellung des Bremspedals.

Gemäß einer vorteilhaften Weiterbildung der Erfindung wird in einem zweiten Drucklufterzeugungsmodus in Kompressionsphasen des Druckluftkompressors erzeugte Druckluft von dem Kompressionsraum des Druckluftkompressors in das zweite Druckluft speichernde Behältnis geleitet. Dies hat den Vorteil, dass der Druckluftkompressor auch für das Befüllen des zweiten Druckluft speichernden Behältnisses verwendet werden kann, so dass kein weiterer Druckluftkompressor erforderlich ist.

Gemäß einer vorteilhaften Weiterbildung der Erfindung wird in einer zweiten Schubphase im Betrieb des Fahrzeuges der Druckluftkompressor im zweiten Drucklufterzeugungsmodus betrieben. Die Nutzung einer Schubphase hat auch hier die zuvor bereits bezüglich des ersten Drucklufterzeugungsmodus genannten Vorteile. In der zweiten Schubphase wird somit, ohne dass Kraftstoff dafür verbraucht werden muss, das zweite Druckluft speichernde Behältnis mit Druckluft befüllt.

Die erste und zweite Schubphase im Betrieb des Fahrzeuges können grundsätzlich beliebige Schubphasen sein, wobei durch die Begriffe "erste" und "zweite" keine zeitliche Reihenfolge oder Priorität festgelegt werden soll, sondern lediglich eine sprachliche Unterscheidung vorgenommen wird. Insbesondere schließt die Erfindung auch die Möglichkeit ein, dass in einer länger andauernden Schubphase bei Bedarf zwischen dem ersten und dem zweiten Drucklufterzeugungsmodus umgeschaltet wird, gegebenenfalls auch mehrfach.

Gemäß einer vorteilhaften Weiterbildung der Erfindung erfolgt ein Betrieb im zweiten Drucklufterzeugungsmodus nur dann, wenn in dem Bremskreis-Druckluftbehälter ein vorbestimmter Mindestdruck vorhanden ist. Alternativ erfolgt der Betrieb im zweiten Drucklufterzeugungsmodus nur dann, wenn der Bremskreis-Druckluftbehälter bis zu seinem Maximaldruck befüllt ist. Hierdurch wird eine vorrangige Druckluft-Befüllung des Bremskreis-Druckluftbehälters sichergestellt, was für einen sicheren Betrieb der Druckluft-Bremsanlage vorteilhaft ist.

Gemäß einer vorteilhaften Weiterbildung der Erfindung ist das zweite Druckluft speichernde Behältnis ein zusätzlicher Druckluftbehälter, der zusätzlich zu dem Bremskreis-Druckluftbehältern und gegebenenfalls weiteren in einer pneumatischen Bremsanlage eines Nutzfahrzeugs vorgesehenen Druckluftbehältern vorgesehen ist. Der zusätzliche Druckluftbehälter ist damit als weiteres Bauteil in dem Fahrzeug ergänzt, ohne dass es für die pneumatische Bremsanlage erforderlich wäre. Daher kann der zusätzliche Druckluftbehälter auf seinen hauptsächlichen Einsatzzweck für den zweiten Druckluftexpansionsmodus hin optimiert werden und unterliegt nicht hinsichtlich seiner Auslegung den Vorschriften für Druckluft-Bremsanlagen. Vorteilhaft kann der zusätzliche Druckluftbehälter als Hochdruckbehälter ausgebildet sein, der für ein Druckniveau von 20 bar, gegebenenfalls auch 30 oder 35 bar ausgelegt ist.

Gemäß einer vorteilhaften Weiterbildung der Erfindung ist das dritte Druckluft speichernde Behältnis ein Wärmetauscher, der im dritten Druckluftexpansionsmodus eingangsseitig mit von dem Druckluftkompressor in den Kompressionsphasen abgegebener Druckluft befüllt wird, während ausgangsseitig des Wärmetauschers erwärmte Druckluft dem Kompressionsraum des Druckluftkompressors in den Expansionsphasen wiederzugeführt wird. Hierdurch kann ein Umlaufbetrieb der Druckluft durch den Wärmetauscher realisiert werden, bei dem der Wärmetauscher temporär die Druckluft an einem Eingangsanschluss aufnimmt und zugleich an einem Ausgangsanschluss erwärmte Druckluft dem Druckluftkompressor für die nächste Expansionsphase wieder zur Verfügung stellt. Es hat sich gezeigt, dass durch einen solchen Umlaufbetrieb der mit dem Antriebsmotor verbundene Druckluftkompressor selbsttätig als Motor läuft und hierbei eine gewisse Antriebsenergie an den Antriebsmotor des Fahrzeuges abgibt. Bei Auswahl günstiger Parameter kann auf diese Weise von einem üblichen, in einem Nutzfahrzeug mit Druckluft-Bremsanlage vorgesehenen Druckluftkompressor eine aus der Abwärme des Antriebsmotors generierte zusätzliche Antriebsleistung erzeugt werden.

In einer vorteilhaften Ausgestaltung der Erfindung ist der Wärmetauscher thermisch mit dem Antriebsmotor oder dem Abgassystem, z.B. einem Auspuffrohr, gekoppelt. Der Wärmetauscher kann z.B. als wendelförmig gebogenes Rohr ausgebildet sein, das um das Auspuffrohr gewunden ist. In einer vorteilhaften Ausgestaltung der Erfindung kann der Wärmetauscher und die an den Wärmetauscher Wärme abgebenden Bauteile des Antriebsmotors bzw. des Abgassystems gegenüber der Umgebung thermisch isoliert ausgebildet sein.

In einer vorteilhaften Ausgestaltung der Erfindung wird jeweils vor der Einleitung des dritten Druckluftexpansionsmodus anhand der Abgastemperatur und/oder der Abgasmenge des Antriebsmotors abgeschätzt, welche Zusatzleistung im dritten Druckluftexpansionsmodus von dem Druckluftkompressor erzeugbar ist. Der dritte Druckluftexpansionsmodus wird nur dann eingeleitet, wenn die erzeugbare Antriebskraft ausreichend hoch ist, zum Beispiel über 0,3 KW liegt. Bei geringeren Werten wird der dritte Druckluftexpansionsmodus nicht eingeleitet, um den Druckluftkompressor zu schonen. Insbesondere wenn sich durch die Abschätzung negative Werte ergeben, wird der dritte Druckluftexpansionsmodus nicht eingeleitet.

Ein Verfahren zur Drucksteuerung in einem Fahrzeug kann auch vorteilhaft nur mit dem zuvor beschriebenen dritten Druckluftexpansionsmodus realisiert werden, das heißt ohne die zuvor erläuterten ersten und zweiten Druckluftexpansionsmodi. Der dritte Druckluftexpansionsmodus, der in diesem Fall der einzige Druckluftexpansionsmodus ist, kann dann unter den zuvor genannten Bedingungen eingeleitet werden.

Gemäß einer vorteilhaften Weiterbildung der Erfindung wird die von dem Druckluftkompressor in den Kompressionsphasen ausgangsseitig abgegebene Druckluft in einem mehrstufigen Verdichtungsprozess erzeugt. Hierfür kann ein Mehrstufenkompressor, zum Beispiel ein Zweistufenkompressor, verwendet werden. Die mehrstufige Verdichtung ermöglicht es, auf energetisch günstige Weise ein hohes ausgangsseitiges Druckniveau des Druckluftkompressors zu erzeugen. Insbesondere für den zuvor beschriebenen Umlaufbetrieb im dritten Druckluftexpansionsmodus ist eine zweistufige Verdichtung vorteilhaft. Es hat sich gezeigt, dass hierdurch ein günstiger Kompromiss zwischen gerätemäßigem Aufwand für die Drucklufterzeugung, Energieeffizienz und erzeugbarem Druckniveau erzielbar ist.

Gemäß einer vorteilhaften Weiterbildung der Erfindung wird zwischen wenigstens zwei Verdichtungsstufen des mehrstufigen Verdichtungsprozesses die Druckluft durch einen Kühler geleitet, in dem die Drucklufttemperatur verringert wird. Hierdurch kann eine Art Zwischenkühlung der Druckluft realisiert werden. Durch die Zwischenkühlung nach einer ersten Verdichtungsstufe kann die Drucklufttemperatur auf ein für die zweite Verdichtungsstufe akzeptables Niveau gesenkt werden. Dies hat den Vorteil, dass der gesamte Verdichtungsprozess einem isothermen Verdichtungsprozess angenähert werden kann, der einen besonders energieeffizienten Betrieb des Druckluftkompressors erlaubt. Als Kühler kann zum Beispiel ein Wasserkühlkreislauf im Zylinderkopf eines Zweistufen-Druckluftkompressors vorgesehen werden.

Gemäß einer vorteilhaften Weiterbildung der Erfindung erfolgt ein Betrieb im dritten Druckluftexpansionsmodus nur dann, wenn in dem Bremskreis-Druckluftbehälter ein vorbestimmter Mindestdruck vorhanden ist. Alternativ erfolgt ein Betrieb im dritten Druckluftexpansionsmodus nur dann, wenn der Bremskreis-Druckluftbehälter bis zu seinem Maximaldruck befüllt ist. Dies stellt eine stets ausreichende, vorrangige Befüllung des Bremskreis-Druckluftbehälters durch den Druckluftkompressor sicher.

Gemäß einer vorteilhaften Weiterbildung der Erfindung erfolgt ein Betrieb im dritten Druckluftexpansionsmodus nur dann, wenn in dem zweiten Druckluft speichernden Behältnis ein vorbestimmter Mindestdruck vorhanden ist oder das zweite Druckluft speichernde Behältnis bis zu seinem Maximaldruck befüllt ist. Hierdurch wird eine vorrangige Druckluft-Befüllung des zweiten Druckluft speichernden Behältnisses vor dem dritten Druckluft speichernden Behältnis sichergestellt. Insbesondere bei Ausbildung des dritten Druckluft speichernden Behältnisses als Wärmetauscher wird somit der zuvor beschriebene Umlaufbetrieb nachrangig erst nach Auffüllung der ersten und zweiten Druckluft speichernden Behältnisse mit Druckluft eingeleitet. Hierdurch kann bei den Schubphasen eine möglichst große Energiemenge in Form von gespeicherter Druckluft zurück gewonnen werden und bei einer späteren Phase mit Antriebskraft-Bedarf wieder an den Antriebsmotor abgegeben werden.

Gemäß einer vorteilhaften Weiterbildung der Erfindung wird in einer Phase mit einem Antriebskraft-Bedarf im Betrieb des Fahrzeuges entweder, soweit vorhanden, der erste Druckluftexpansionsmodus, der zweite Druckluftexpansionsmodus oder der dritte Druckluftexpansionsmodus aktiviert, wobei der zweite Druckluftexpansionsmodus vorrangig vor dem ersten Druckluftexpansionsmodus aktiviert wird und der zweite Druckluftexpansionsmodus vorrangig vor dem dritten Druckluftexpansionsmodus aktiviert wird. Hierdurch wird eine Maximierung der Energieeffizienz erzielt, da durch die Unterstützung durch Druckluft aus einem Druckluft speichernden Behältnis in der Regel eine höhere Zusatzleistung erzeugt werden kann als durch den Umlaufbetrieb.

Gemäß einer vorteilhaften Weiterbildung der Erfindung wird bei Erreichen oder Unterschreiten einer Mindestdruckschwelle des Drucks in dem ersten Druckluft speichernden Behältnis vor dem Einleiten des ersten Drucklufterzeugungsmodus durch die Auswertung von Satellitennavigationsinformationen und digitalen Kartendaten geprüft, ob anhand eines unmittelbar voraus liegenden Fahrbahnabschnitts eine bevorstehende Schubphase im Betrieb des Fahrzeugs erkennbar ist, und bei Erkennung einer bevorstehenden Schubphase wird die Einleitung des ersten Drucklufterzeugungsmodus so lange verzögert, bis die bevorstehende Schubphase eintritt. Dies erlaubt eine sozusagen vorausschauende Einbeziehung des voraus liegenden Fahrbahnverlaufs in die Nutzung des Druckluftkompressors zur Drucklufterzeugung. Hierdurch kann zwar die an sich vorgesehene Mindestdruckschwelle geringfügig unterschritten werden, allerdings wird der Vorteil erreicht, dass der Druckluftkompressor nur in einer Schubphase zur Druckluftförderung eingesetzt wird und nicht in einer Phase mit Antriebskraftbedarf bereits zusätzliche Energie durch den Druckluftkompressor verbraucht wird. Zur Sicherstellung einer ausreichenden Druckluftversorgung der Bremsanlage kann die Verzögerung der Einleitung des ersten Drucklufterzeugungsmodus nach einer Zeitgrenze abgebrochen werden und der erste Drucklufterzeugungsmodus dann eingeleitet werden.

Gemäß einer vorteilhaften Weiterbildung der Erfindung kann die Verzögerung der Einleitung des ersten Drucklufterzeugungsmodus abgebrochen werden und der erste Drucklufterzeugungsmodus eingeleitet werden, wenn der Druck in dem ersten Druckluft speichernden Behältnis eine untere Grenzdruckschwelle erreicht oder unterschreitet, die unterhalb der Mindestdruckschwelle liegt. Bei Unterschreitung der Grenzdruckschwelle wird der erste Drucklufterzeugungsmodus auch dann eingeleitet, wenn keine Schubphase vorliegt.

In analoger Weise können die Satellitennavigationsinformationen auch für die Ausschaltgrenze des Druckluftkompressors genutzt werden. Gemäß einer vorteilhaften Weiterbildung der Erfindung wird in dem zweiten Drucklufterzeugungsmodus bei Erreichen oder Überschreiten einer Höchstdruckschwelle des Drucks in dem zweiten Druckluft speichernden Behältnis durch die Auswertung von Satellitennavigationsinformationen und digitalen Kartendaten geprüft, ob eine aktuelle Schubphase unter Berücksichtigung eines unmittelbar voraus liegenden Fahrbahnabschnitts noch für eine Mindestdauer vorliegt, und wenn diese Bedingung erfüllt ist, wird der Druckluftkompressor im zweiten Drucklufterzeugungsmodus weiter betrieben, bis die aktuelle Schubphase beendet ist oder der Druck in dem zweiten Druckluft speichernden Behältnis eine obere Grenzdruckschwelle erreicht oder überschreitet, die oberhalb der Höchstdruckschwelle liegt. Hierdurch können die Schubphasen auch im zweiten Drucklufterzeugungsmodus bestmöglich ausgenutzt werden.

Die Erfindung betrifft gemäß Anspruch 16 ferner eine Drucksteuereinrichtung für ein Fahrzeug mit einer pneumatischen Bremsanlage, wobei das Fahrzeug wenigstens folgendes aufweist:
a) einen Antriebsmotor zur Erzeugung einer Antriebskraft des Fahrzeuges,
b) die pneumatische Bremsanlage zur Abbremsung des Fahrzeuges, die wenigstens folgendes aufweist:
   b1) mehrere Druckluftbremszylinder,
   b2) eine Druckluftversorgungs- und Speicheranlage mit wenigstens einem ersten Druckluft speichernden Behältnis in Form eines Bremskreis-Druckluftbehälters, aus dem ein oder mehrere Druckluftbremszylinder bei einer Abbremsung des Fahrzeuges mit Druckluft beaufschlagt werden,
   b3) einen mit dem Antriebsmotor des Fahrzeuges gekoppelten oder koppelbaren Druckluftkompressor,
   wobei die Drucksteuereinrichtung wenigstens ein elektronisches Steuergerät und wenigstens eine von dem elektronischen Steuergerät steuerbare Ventileinrichtung zur steuerbaren Verbindung des Kompressionsraums des Druckluftkompressors mit dem Bremskreis-Druckluftbehälter und wenigstens einem oder beiden der zweiten und dritten Druckluft speichernden Behältnisse aufweist, wobei das elektronische Steuergerät ein Steuerprogramm aufweist, dass eingerichtet ist zur Ausführung eines Verfahrens der zuvor beschriebenen Art. Dies erlaubt vorteilhaft eine softwaremäßige Implementierung des Verfahrens.

Die Erfindung wird nachfolgend anhand von Ausführungsbeispielen unter Verwendung von Zeichnungen näher erläutert.

Es zeigen:
- Figur 1: - ein Fahrzeug in schematischer Darstellung und
- Figur 2: - einen einstufigen Druckluftkompressor sowie weitere Elemente der Druckluftanlage und
- Figur 3: - eine Druckluftanlage mit einem Kompressor gemäß Figur 2 und
- Figur 4 und 5: - Verfahrensabläufe in Form von Flussdiagrammen und
- Figur 6: - einen zweistufigen Verdichtungsvorgang.

In den Figuren werden gleiche Bezugszeichen für einander entsprechende Elemente verwendet.

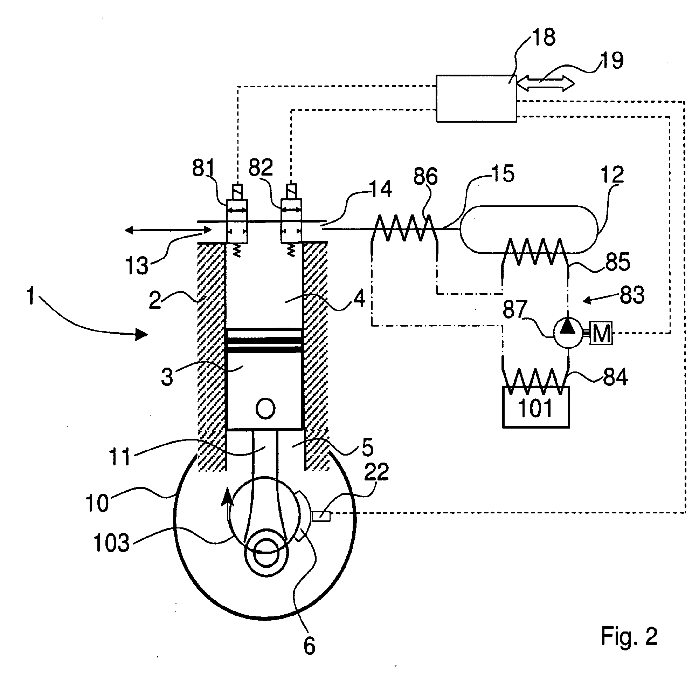

In den Figuren werden durchgezogene einfache Linien für Druckluftleitungen verwendet, gestrichelte Linien für elektrische Leitungen, doppelt durchgezogene Linien für Abgasleitungen und dreifach durchgezogene Linie für mechanische Verbindungen, wie zum Beispiel drehende Wellen. In der Figur 2 werden zudem für den durch die Wärmetauscher geführten hydraulischen Kreislauf strichpunktierte Linien verwendet.

Soweit die dargestellten elektrisch betätigbaren Ventile in den Figuren mit einem Symbol für einen Magneten dargestellt sind, so seien hiermit alle Arten elektrischer Betätigung erfasst, insbesondere piezoelektrische, elektromagnetische, elektrohydraulische, elektropneumatische und elektromotorische Betätigung.

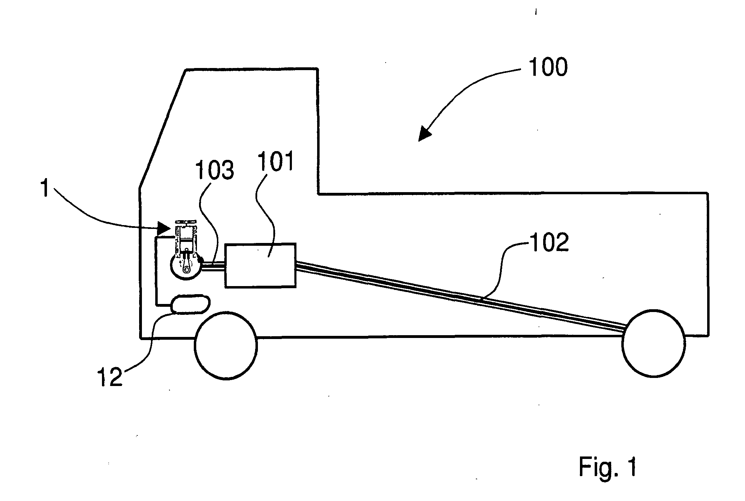

In der Figur 1 ist ein Fahrzeug 100 dargestellt, das einen Antriebsmotor 101 aufweist, zum Beispiel einen Dieselmotor, der über eine kardanisch mit der Hinterachse des Fahrzeugs 100 verbundene Antriebswelle 102 eine Antriebskraft zum Antrieb des Fahrzeugs 100 erbringen kann. Der Antriebsmotor 101 ist über eine Welle 103 mit einem Druckluftkompressor 1 des Fahrzeugs 100 verbunden. Die Welle 103 ist zugleich Abtriebswelle des Antriebmotors 101 und Antriebswelle des Druckluftkompressors 1. Je nach Ausführung kann noch eine Übersetzung zwischen dem Antriebsmotor und dem Druckluftkompressor mittels eines Getriebes vorgesehen sein. Es kann auch eine schaltbare Kupplung vorgesehen sein, durch die die Verbindung zwischen dem Antriebsmotor 101 und dem Druckluftkompressor 1 bei Bedarf unterbrechbar ist. Der Druckluftkompressor 1 ist zudem über eine Druckluftleitung mit einer Druckluftversorgungs- und Speicheranlage des Fahrzeuges 100 verbunden, die in der Figur 1 vereinfacht durch einen Bremskreis-Druckluftbehälter 12 symbolisiert wird. Die Druckluftversorgungs- und Speicheranlage weist beispielsweise ein Mehrkreisschutzventil, einen Lufttrockner und, zusätzlich zu dem erwähnten Bremskreis-Druckluftbehälter 12, weitere Druckluftbehälter für weitere Bremskreise oder andere Druckluftkreise des Fahrzeuges auf. Beispielhaft sei angenommen, dass der Bremskreis-Druckluftbehälter 12 der Druckluftbehälter des ersten Betriebsbremskreises sei.

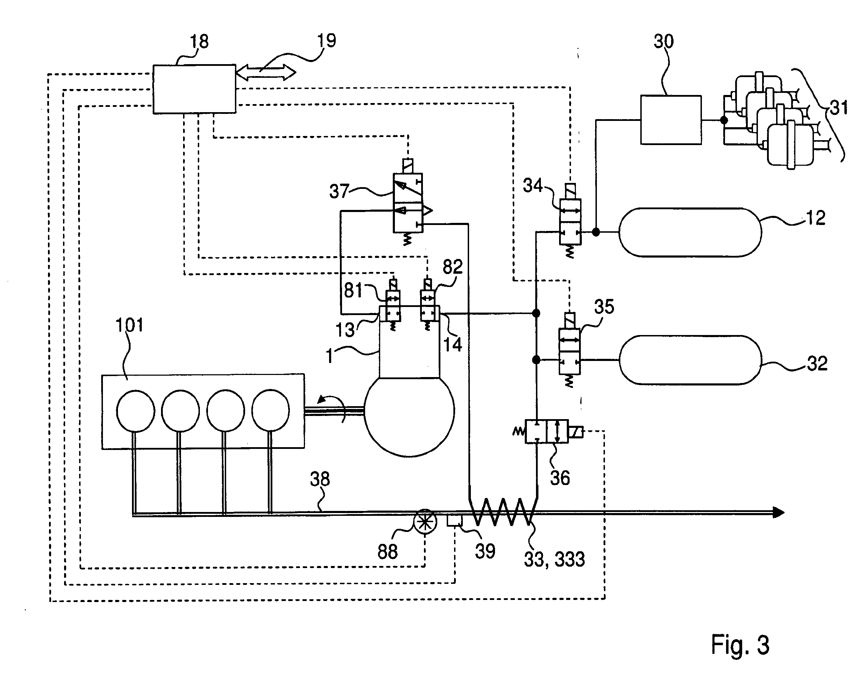

Das Fahrzeug 100 weist eine pneumatische Bremsanlage auf, die neben den bereits erwähnten Druckluftkompressor 1 und der Druckluftversorgungs- und Speicheranlage weitere Komponenten aufweist, die anhand der Figuren 2 und 3 nachfolgend noch erläutert werden.

Die Figur 2 zeigt in schematischer Darstellung den Druckluftkompressor 1, welcher als Ein- oder Mehrzylinderdruckluftkompressor ausgebildet sein kann, sowie die Druckluftversorgungs- und Speicheranlage, symbolisiert durch den Bremskreis-Druckluftbehälter 12. Der Druckluftkompressor 1 ist als üblicher Kolbenkompressor ausgeführt. Der Druckluftkompressor 1 weist einen Zylinder 2 sowie einen darin befindlichen Kolben 3 auf. Unterhalb des Zylinders 2 weist der Druckluftkompressor 1 ein Kurbelgehäuse 10 auf, in dem ein Pleuelantrieb für den Kolben 3 vorgesehen ist. Der Pleuelantrieb weist ein mit der Antriebswelle 103 des Druckluftkompressors 1 verbundenes Pleuel 11 auf, das an einer Seite mit dem Kolben 3 und an der anderen Seite mit einem Pleuelzapfen an der Antriebswelle 103 verbunden ist. Bei einer Drehung der Antriebswelle 103 wird der Kolben 3 über den Pleuelantrieb in eine zyklische Aufwärts- und Abwärtsbewegung versetzt.

Der Kolben 3 teilt den Druckluftkompressor 1 in einen Kompressionsraum 4 und in einen davon druckmittelseitig getrennten Kurbelwellen-Raum auf, der druckmittelseitig mit dem Innenraum 5 des Kurbelgehäuses 10 verbunden ist. Bei einer Abwärtsbewegung des Kolbens 3 wird das Volumen des Kompressionsraums 4 vergrößert. Der Druckluftkompressor 1 befindet sich dann in einer Expansionsphase (Volumenvergrößerungsphase), in der Luft aus der Atmosphäre über einen Einlassanschluss 13 angesaugt wird und über ein elektrisch steuerbares Einlassventil 81 in den Kompressionsraum 4 gelangt.

Der Einlassanschluss 13 kann auch mit einem weiteren Fahrzeugaggregat verbunden oder verbindbar ausgebildet sein, das bereits vorverdichtete Luft abgibt, z.B. mit einem Abgasturbolader. Hierdurch kann die Förderleistung des Druckluftkompressors 1 in einem Drucklufterzeugungsmodus bzw. die mittels des Druckluftkompressors 1 erzeugbare Nutzleistung in einem Expansionsmodus, insbesondere im dritten Expansionsmodus, gesteigert werden.

Bei einer Aufwärtsbewegung des Kolbens 3 verringert sich das Volumen des Kompressionsraums 4. Die darin befindliche Luft wird komprimiert. Diese Phase wird als Kompressionsphase (Volumenverringerungsphase) bezeichnet. Bei Erreichen eines Drucks im Kompressionsraum 4, der höher als der Druck in dem angeschlossenen Bremskreis-Druckluftbehälter 12 ist, wird ein elektrisch steuerbares Auslassventil 82 geöffnet. Hierüber wird die komprimierte Druckluft von dem Kompressionsraum 4 zu einem Auslassanschluss 14 des Druckluftkompressors 1 geführt und gelangt über eine Druckluftleitung 15 in den Bremskreis-Druckluftbehälter 12. In einer Kompressionsphase wird das elektrisch steuerbare Einlassventil 81 geschlossen.

In der Figur 2 ist zudem als Teil einer Drucksteuereinrichtung ein elektronisches Steuergerät 18 dargestellt. Das elektronische Steuergerät 18 ist über eine Datenverbindung 19, z. B. einen Datenbus in Form eines CAN-Busses, mit weiteren elektronischen Einrichtungen in dem Fahrzeug verbunden. Insbesondere kann das elektronische Steuergerät 18 mit einem Motorsteuergerät des Antriebsmotors des Fahrzeugs verbunden sein. Das elektronische Steuergerät 18 ist mit dem elektrisch steuerbaren Einlassventil 81 und dem elektrisch steuerbaren Auslassventil 82 über eine jeweilige elektrische Leitung verbunden. Das elektrisch steuerbare Einlassventil 81 und das elektrisch steuerbare Auslassventil 82 weist jeweils eine geöffnete und eine geschlossene Schaltstellung auf, d. h. zum Beispiel eine Ausbildung als 2/2-Wegeventil. Das elektronische Steuergerät 18 betätigt das elektrisch steuerbare Einlassventil 81 und das elektrisch steuerbare Auslassventil 82 in einem Drucklufterzeugungsmodus derart, dass in einer Expansionsphase das elektrisch steuerbare Einlassventil 81 geöffnet ist und das elektrisch steuerbare Auslassventil 82 geschlossen ist. Hierdurch kann Luft über den Einlassanschluss 13 angesaugt werden. In einer Kompressionsphase wird durch das elektronische Steuergerät 18 das elektrisch steuerbare Einlassventil 81 geschlossen und das elektrisch steuerbare Auslassventil 82 geöffnet. Hierdurch kann Druckluft an dem Auslassanschluss 14 abgegeben werden. Das Öffnen des elektrisch steuerbaren Auslassventils 82 in einer Kompressionsphase erfolgt vorteilhaft erst dann, wenn der Druck im Kompressionsraum 4 höher ist als in einem am Auslassanschluss 14 angeschlossenen Druckluftbehälter.

In einem Druckluftexpansionsmodus kann in einer Expansionsphase Druckluft über den Auslassanschluss 14 in den Kompressionsraum 4 geleitet werden, in dem durch das elektronische Steuergerät 18 das elektrisch steuerbare Auslassventil 82 geöffnet wird. Das elektrisch steuerbare Einlassventil 81 ist dann geschlossen. In einer Kompressionsphase im Druckluftexpansionsmodus wird dann durch das elektronische Steuergerät 18 das elektrisch steuerbare Auslassventil 82 geschlossen und das elektrisch steuerbare Einlassventil 81 geöffnet. Hierdurch kann die expandierte Druckluft über den Einlassanschluss 13 z. B. in die Atmosphäre abgegeben werden.

Statt der dargestellten elektrisch steuerbaren Ventile 81, 82 im Zylinderkopf des Zylinders 2 des Druckluftkompressors 1 können auch andere Arten der Ventilsteuerung vorteilhaft realisiert werden, z. B. mechanisch betätigbare Ventile, die über eine Nockenwellensteuerung gesteuert werden, die mit der Antriebswelle 103 verbunden ist, oder extern angeordnete elektrisch betätigbare Ventile.

In der Figur 2 ist eine weitere vorteilhafte Weiterbildung der Erfindung beispielhaft dargestellt. Vorgesehen ist ein Wärmetausch-Kreislauf 83. Der Wärmetausch-Kreislauf 83 weist ein Wärmeaufnahmeelement 84 auf, das z. B. als spiralförmiger Wendel ausgebildet sein kann. Das Wärmeaufnahmeelement 84 ist thermisch mit dem Antriebsmotor 101 oder einem damit thermisch verbundenen Teil gekoppelt, z.B. mit einer Abgasleitung. Der Wärmetausch-Kreislauf 83 weist außerdem ein erstes Wärmeabgabeelement 85 auf, das thermisch mit dem Bremskreis-Druckluftbehälter 12 gekoppelt ist, sowie ein zweites Wärmeabgabeelement 86, das thermisch mit der Druckluftleitung 15 gekoppelt ist. Es ist auch möglich, dass nur eines der Wärmeabgabeelemente 85, 86 vorgesehen ist. Die Wärmeabgabeelemente 85, 86 können vergleichbar wie das Wärmeaufnahmeelement 84 aufgebaut sein. Das Wärmeaufnahmeelement 84, das erste Wärmeabgabeelement 85 und das zweite Wärmeabgabeelement 86 sind über entsprechende Rohrleitungen miteinander verbunden. Durch die Rohrleitungen wird ein Wärmeübertragungsmedium, z. B. Wasser, gepumpt. Hierzu ist in einer der Rohrleitungen eine beispielsweise elektromotorisch angetriebene Pumpe 87 angeordnet. Die Pumpe 87 kann elektrisch von dem elektronischen Steuergerät 18 gesteuert werden. Das elektronische Steuergerät 18 kann hierbei die Pumpe 87 je nach Bedarf ein- oder ausschalten. Alternativ kann die Druckluft auch direkt durch Abgaswärme erwärmt werden, d.h. ohne den Wasserkreislauf. Hierzu kann der Wärmetausch-Kreislauf 83 z.B. als Plattenwärmetauscher ausgeführt sein, der in einem Abgaskreis vom Abgas und in einem vom Abgaskreis getrennten Druckluftkreis von der Druckluft durchströmt wird. Durch den beschriebenen Wärmetausch-Kreislauf 83 kann Abwärme des Antriebsmotors 101 zur Erwärmung der Druckluft in der Druckluftversorgungs- und Speicheranlage, insbesondere in dem Bremskreis-Druckluftbehälter 12, genutzt werden.

Die Figur 3 zeigt die in dem Fahrzeug 100 vorgesehenen Komponenten und deren Zusammenwirken mit weiteren Details. Hierbei ist insbesondere die anhand der Figur 2 bereits beschriebene Druckluftanlage mit dem Druckluftkompressor 1 sowie dem Bremskreis-Druckluftbehälter 12 dargestellt. Die Druckluftanlage weist ferner eine pneumatische Bremsanlage auf, zu der neben dem Druckluftkompressor 1 und dem Bremskreis-Druckluftbehälter 12 Druckluftbremszylinder 31 sowie eine Druckluft-Steueranordnung 30 zur Steuerung der Druckluftzufuhr zu den Druckluftbremszylindern 31 gehören. Die Druckluft-Steueranordnung 30 ist mit dem Bremskreis-Druckluftbehälter 12 verbunden. Die Druckluft-Steueranordnung 30 ist hier lediglich schematisch wiedergegeben. Sie kann neben der Druckluftversorgungs- und Speicheranlage insbesondere ein mittels eines Bremspedals betätigbares Bremsventil oder entsprechende Komponenten einer elektronisch gesteuerten Bremsanlage (EBS) aufweisen, wie z.B. einen elektrischen oder elektropneumatischen Bremswertgeber, eine elektronische Steuereinheit sowie von der elektronischen Steuereinheit angesteuerte Pneumatikventile, mit denen eine Druckluftzumessung zu den Druckluftbremszylindern 31 gesteuert wird.

Gemäß Figur 3 ist ein zweites Druckluft speicherndes Behältnis 32 vorgesehen, das ebenfalls als Druckluftbehälter ausgebildet sein kann, jedoch zusätzlich zu den Komponenten der pneumatischen Bremsanlage vorgesehen ist. Das zweite Druckluft speichernde Behältnis 32 dient hierbei insbesondere einer Zwischenspeicherung von Druckluft, die in Schubphasen des Fahrzeugs 100 ohne Kraftstoffverbrauch erzeugt werden kann, um dann in Phasen mit erhöhtem Antriebskraftbedarf wieder in den Druckluftkompressor 1 zurückgespeist zu werden, um den Antriebsmotor 101 zu unterstützen.

Die Figur 3 zeigt zusätzlich ein drittes Druckluft speicherndes Behältnis 33 in Form eines Wärmetauschers 333. Der Wärmetauscher 333 ist thermisch mit einer Abgasleitung 38 des Antriebsmotors 101 verbunden, z.B. mit einem Auspuffrohr oder einem Auspuffkrümmer. Der Wärmetauscher 333 kann z.B. einen Wärmeaufnahme-Wendel aufweisen, der um das Abgasrohr oder den Krümmer herum gewunden ist. Hierdurch wird durch das Abgas abgegebene Abwärme des Antriebsmotors 101 über den Wärmetauscher 333 in den Druckluftkreislauf eingespeist. Der Wärmetauscher 333 kann einen Aufbau wie die zuvor erläuterten Wärmeabgabeelemente 85, 86 bzw. das Wärmeaufnahmeelement 84 aufweisen.

Ferner sind in der Figur 3 als weitere elektrisch betätigbare Ventile ein erstes elektrisch betätigbares Ventil 34, ein zweites elektrisch betätigbares Ventil 35, ein drittes elektrisch betätigbares Ventil 36 und ein viertes elektrisch betätigbares Ventil 37 dargestellt, die über elektrische Leitungen mit dem elektronischen Steuergerät 18 verbunden sind. Das elektronische Steuergerät 18 weist eine entsprechende Programmierung zur Betätigung der elektrisch betätigbaren Ventile 34, 35, 36, 37 nach einem der hier beschriebenen Verfahren auf.

Über das erste elektrisch betätigbare Ventil 34 ist der Bremskreis-Druckluftbehälter 12 mit dem Auslassanschluss 14 des Druckluftkompressors 1 verbindbar oder dagegen absperrbar. Das erste elektrisch betätigbare Ventil 34 wird von dem elektronischen Steuergerät 18 in dem ersten Drucklufterzeugungsmodus und in dem ersten Druckluftexpansionsmodus in die Durchlassstellung geschaltet.

Das zweite Druckluft speichernde Behältnis 32 ist über das zweite elektrisch betätigbare Ventil 35 mit dem Auslassanschluss 14 des Druckluftkompressors 1 verbindbar oder dagegen absperrbar. Das zweite elektrisch betätigbare Ventil 35 wird von dem elektronischen Steuergerät 18 in dem zweiten Drucklufterzeugungsmodus und in dem zweiten Druckluftexpansionsmodus in die Durchlassstellung geschaltet.

Der Wärmetauscher 333 ist eingangsseitig über das dritte elektrisch betätigbare Ventil 36 mit dem Auslassanschluss 14 des Druckluftkompressors 1 verbindbar oder dagegen absperrbar. Das dritte elektrisch betätigbare Ventil 36 wird von dem elektronischen Steuergerät 18 in dem dritten Druckluftexpansionsmodus in die Durchlassstellung geschaltet.

Das vierte elektrisch betätigbare Ventil 37 dient zur Umschaltung des Einlassanschlusses 13 des Druckluftkompressors 1 zwischen einer Verbindung mit der Atmosphäre und einem ausgangsseitigen Anschluss des Wärmetauschers 333. In der in Figur 3 dargestellten Schaltstellung des vierten elektrisch betätigbaren Ventils 37 ist der Einlassanschluss 13 mit der Atmosphäre verbunden.

Statt mit der Atmosphäre kann das vierte elektrisch betätigbare Ventils 37 den Einlassanschluss 13 auch mit einem weiteren Fahrzeugaggregat verbinden, das bereits vorverdichtete Luft abgibt, z.B. mit einem Abgasturbolader. Hierdurch kann die Förderleistung des Druckluftkompressors 1 in einem Drucklufterzeugungsmodus bzw. die mittels des Druckluftkompressors 1 erzeugbare Nutzleistung in einem Expansionsmodus, insbesondere im dritten Expansionsmodus, gesteigert werden.

Alternativ hierzu kann das vierte elektrisch betätigbare Ventil 37 auch hinter dem Auslassanschluss 14 des Druckluftkompressors 1 angeordnet sein, um an dieser Stelle abwechselnd die Eingangsseite und die Ausgangsseite des Wärmetauschers 333 mit dem Auslassanschluss 14 des Druckluftkompressors 1 zu verbinden. Eine weitere Ausführungsform sieht vor, das vierte elektrisch betätigbare Ventil 37 als zusätzliches schaltbares Ventil im Zylinderkopf des Druckluftkompressors 1 zu integrieren.

Bei Betätigung des vierten elektrisch betätigbaren Ventils 37 durch das elektronische Steuergerät 18 wird in der Figur 3 dargestellten Ausführungsform der Einlassanschluss 13 mit der Ausgangsseite des Wärmetauschers 333 verbunden. Im dritten Druckluftexpansionsmodus wird daher das vierte elektrisch betätigbare Ventil 37 von dem elektronischen Steuergerät 18 betätigt. Andernfalls verbleibt es in der Figur 3 dargestellten Schaltstellung.

Über das elektrisch steuerbare Einlassventil 81 und das elektrisch steuerbare Auslassventil 82 des Druckluftkompressors 1 wird ferner die Luftzufuhr zu dem Kompressionsraum 4 und die Luftabfuhr aus dem Kompressionsraum 4 in der anhand der Figur 2 bereits beschriebenen Weise gesteuert.

Im ersten und im zweiten Drucklufterzeugungsmodus ist das vierte elektrisch betätigbare Ventil 37 jeweils in der in Figur 3 dargestellten, unbetätigten Stellung. Hierbei ist der Einlassanschluss 13 mit der Atmosphäre verbunden. Durch entsprechende, den Kompressions- und Expansionsphasen des Druckluftkompressors 1 angepasste Steuerung des elektrisch steuerbaren Einlassventils 81 und des elektrisch steuerbaren Auslassventils 82 wird Druckluft am Auslassanschluss 14 erzeugt. Die Druckluft wird im ersten Drucklufterzeugungsmodus durch Öffnen des ersten elektrisch betätigbaren Ventils 34 in den Bremskreis-Druckluftbehälter 12 eingespeist. Im zweiten Drucklufterzeugungsmodus wird die Druckluft durch Öffnen des zweiten elektrisch betätigbaren Ventils 35 in das zweite Druckluft speichernde Behältnis 32 eingespeist.

Ferner kann ein Nachfüllmodus vorgesehen sein, in dem aus dem zweiten Druckluft speichernden Behältnis 32 direkt Druckluft in den Bremskreis-Druckluftbehälter 12 nachgefüllt wird, z.B. wenn der Druck in dem Bremskreis-Druckluftbehälter 12 zu gering geworden ist. In diesem Fall schaltet das elektronische Steuergerät 18 sowohl das erste elektrisch betätigbare Ventil 34 als auch das zweite elektrisch betätigbare Ventil 35 in die Durchlassstellung.

Gemäß Figur 3 ist ferner an der Abgasleitung 38 ein Temperatursensor 39 angeordnet, mit dem die Temperatur der Abgasleitung bzw. die entstehende Abwärme erfasst wird. Ferner ist ein Abgasmengensensor 88 vorgesehen, über den die abgegebene Abgasmenge erfasst wird. Der Temperatursensor 39 sowie der Abgasmengensensor 88 sind über elektrische Leitungen mit dem elektronischen Steuergerät 18 verbunden. Das elektronische Steuergerät 18 wertet die Signale der genannten Sensoren aus und bestimmt hieraus geeignete Phasen im Betrieb des Fahrzeuges 100, in denen der Umlaufbetrieb, bei dem Druckluft durch den Wärmetauscher 333 geleitet wird, energetisch sinnvoll sind. Wenn der Installationsaufwand im Fahrzeug gering gehalten werden soll, kann auch auf den Temperatursensor 39 und den Abgasmengensensor 88 verzichtet werden. In diesem Fall kann das elektronische Steuergerät 18 die Abgastemperatur und -menge aus einem im Speicher hinterlegten Kennfeld berechnen.

In der Anlage gemäß Figur 3 kann ergänzend auch der anhand der Figur 2 beschriebene Wärmetausch-Kreislauf 83, insgesamt oder zum Teil, vorgesehen sein. Ein solcher Wärmetausch-Kreislauf kann beispielsweise zur Erwärmung der Druckluft in dem Bremskreis-Druckluftbehälter 12 vorgesehen sein. Ebenso kann ein solcher Wärmetausch-Kreislauf zur Erwärmung der Druckluft an dem zweiten Druckluft speichernden Behältnis 32 vorgesehen sein. Hierdurch kann die Energiebilanz des Fahrzeugs 100 weiter verbessert werden.

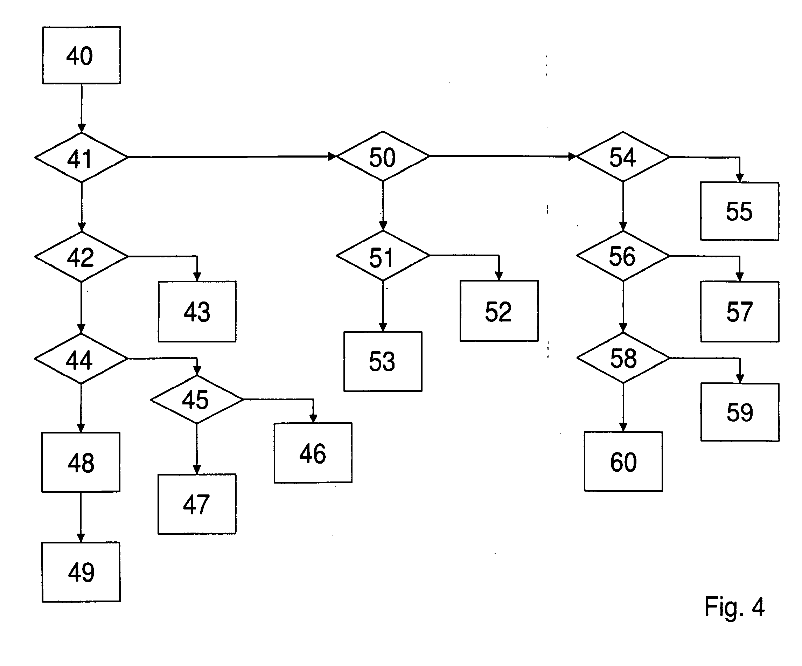

Die Figur 4 zeigt Einzelheiten des durch das elektronische Steuergerät 18 gesteuerten Verfahrensablaufs mit weiteren Details.

Der Verfahrensablauf teilt sich grundsätzlich in drei Zweige auf, die je nach Antriebskraftbedarf bzw. vorliegender Schubphase des Fahrzeuges 100 ausgeführt werden. Hierbei sind die Blöcke 40 bis 49 gemäß Figur 4 einem Betriebszustand des Fahrzeugs 100 zugeordnet, in dem überdurchschnittlich hoher Antriebskraftbedarf vorliegt, z.B. bei Bergauffahrt ab einer bestimmten Steigung bzw. ab einer entsprechend hohen Beladung des Fahrzeugs oder bei starker Beschleunigung.

Die Blöcke 50 bis 53 betreffen Schubphasen im Betrieb des Fahrzeugs 100. In diesen Phasen ist überhaupt keine Antriebskraft erforderlich; vielmehr kann aufgrund des Schubbetriebs Energie zurückgewonnen werden.

Die Blöcke 54 bis 60 betreffen einen Betrieb des Fahrzeugs, in dem keine Schubphase vorliegt, jedoch eine gewisse Antriebskraft des Antriebsmotors 101 erforderlich ist. Die hier erforderliche Antriebskraft ist aber geringer als in den Blöcken 40 bis 49. Beispielhaft sei für den Zweig in den Blöcken 54 bis 60 ein Betrieb des Fahrzeugs auf im wesentlichen ebener Fahrbahn und bei etwa gleich bleibender Fahrgeschwindigkeit genannt.

Der Verfahrensablauf gemäß Figur 4 beginnt mit einem Block 40. Hier wird der Antriebsmotor des Fahrzeugs 100 gestartet, der den Druckluftkompressor 1 antreibt.

Sodann wird in einem Block 41 geprüft, ob ein erhöhter Antriebskraftbedarf vorliegt. Dies kann z.B. anhand einer erhöhten Momentanforderung vom Fahrzeug festgestellt werden. Beispielsweise kann das über die Datenverbindung 19 übermittelte Motormoment des Antriebsmotors 101 mit einem Schwellenwert verglichen werden. Wird dieser Schwellenwert überschritten, wird mit einem Block 42 fortgefahren. In dem Block 42 wird geprüft, ob der Bremskreis-Druckluftbehälter 12 einen Druck aufweist, der unterhalb eines vorbestimmten Mindestdrucks liegt. Sofern dies der Fall ist, wird zu einem Block 43 verzweigt. In dem Block 43 wird der erste Drucklufterzeugungsmodus aktiviert. Hierbei füllt dann der Druckluftkompressor 1 den Bremskreis-Druckluftbehälter 12 mit Druckluft auf.

Die Kriterien, anhand derer im Block 42 entschieden wird, ob der erste Drucklufterzeugungsmodus eingeleitet werden soll oder nicht, können von weiteren Größen abhängig gemacht werden. So kann z.B. die auf der befahrenen Fahrbahn vorausliegende Topologie, z.B. Steigungen oder Gefällestücke, berücksichtigt werden, eine voraussichtliche Dauer bis zur nächsten Schubphase, die Länge der Schubphase sowie das weitere Verkehrsgeschehen, z.B. Bedarf zum Anhalten des Fahrzeugs wegen einer Ampel oder eines Verkehrsstaus. Anhand dieser Kriterien kann z.B. die verwendete Schwelle für den vorbestimmten Mindestdruck angepasst werden, z.B. angehoben oder abgesenkt werden.

Sofern die Bedingung in dem Block 42 nicht erfüllt ist, wird mit einem Block 44 fortgefahren. Dort wird geprüft, ob das zweite Druckluft speichernde Behältnis 32 einen Druck aufweist, der unterhalb eines Mindestsolldrucks liegt. Sofern dies der Fall ist, eignet sich das zweite Druckluft speichernde Behältnis 32 derzeit nicht für eine Einspeisung von Druckluft in den Druckluftkompressor 1 zur Unterstützung des Antriebsmotors 101. Daher wird zu einem Block 45 verzweigt, in dem geprüft wird, ob der dritte Druckluftexpansionsmodus, d.h. Umlaufbetrieb durch den Wärmetauscher 333, energetisch sinnvoll ist. Das Steuergerät 18 prüft hierbei anhand der von dem Temperatursensor 39 und dem Abgasmengensensor 88 abgegebenen Signale, ob eine ausreichende Abgastemperatur und eine ausreichende Abgasmenge vorliegen. Sofern dies nicht der Fall ist, wird zu einem Block 46 verzweigt. Hierbei wird der Umlaufbetrieb nicht eingeleitet. Stattdessen werden das elektrisch steuerbare Einlassventil 81, das elektrisch steuerbare Auslassventil 82 und das vierte elektrisch betätigbare Ventil 37 von dem elektronischen Steuergerät 18 in eine Leerlaufstellung gestellt, die sicherstellt, dass der Druckluftkompressor 1 sozusagen "leer" mit dem Antriebsmotor 101 mitläuft und hierbei möglichst wenig Energie des Antriebsmotors 101 verzehrt. Die Leerlaufstellung kann z.B. ein Schalten des elektrisch steuerbaren Einlassventils 81 in die Durchlassstellung beinhalten. In diesem Fall ist der Kompressionsraum 4 des Druckluftkompressors 1 permanent über das vierte elektrisch betätigbare Ventil 37 mit der Atmosphäre verbunden, was im Ergebnis dazu führt, dass der Kompressionsraum 4 druckfrei ist. Gegebenenfalls kann auch zusätzlich das elektrisch steuerbare Auslassventil 82 in die Durchlassstellung geschaltet werden, um den Kompressionsraum noch weiter zu entlasten. Sofern eine schaltbare Kupplung zwischen dem Druckluftkompressor 1 und dem Antriebsmotor 101 vorgesehen ist, kann auch der Druckluftkompressor 1 von dem Antriebsmotor 101 entkoppelt werden.

Fällt die Prüfung in dem Block 45 positiv aus, so wird vom Block 45 zu einem Block 47 verzweigt. Im Block 47 wird der Umlaufbetrieb aktiviert, d.h. Druckluft wird durch den Wärmetauscher 333 gepumpt und in Expansionsphasen dem Druckluftkompressor 1 direkt wieder zugeführt.

Sofern die Prüfung in dem Block 44 negativ ausfällt, wird vom Block 44 zu einem Block 48 verzweigt. Im Block 48 wird die Luft in dem zweiten Druckluft speichernden Behältnis 32 erwärmt. Die Erwärmung kann z.B. über einen eigenen, dem zweiten Druckluft speichernden Behältnis 32 zugeordneten Wärmetausch-Kreislauf, analog zu dem Wärmetausch-Kreislauf 83 gemäß Figur 2, erfolgen. Die Druckluft wird dann dem Druckluftkompressor 1 über den Auslassanschluss 14 zugeführt, wobei das elektrisch betätigbare Auslassventil 82 in den Expansionsphase auf Durchlass geschaltet wird.

Alternativ oder ergänzend kann eine Erwärmung der Druckluft auch durch Durchleiten der Druckluft aus dem zweiten Druckluft speichernden Behältnis 32 über das zweite elektrisch betätigbare Ventil 35 und das dritte elektrisch betätigbare Ventil 36 durch den Wärmetauscher 333 erfolgen. Die Druckluft wird dann dem Druckluftkompressor 1 über das vierte elektrisch betätigbare Ventil 37 an dem Einlassanschluss 13 zugeführt.

Alternativ kann die Druckluft aus dem zweiten Druckluft speichernden Behältnis 32 auch direkt, d.h. ohne Erwärmung, den Druckluftkompressor 1 zugeführt werden. Die Druckluft wird dann dem Druckluftkompressor 1 über den Auslassanschluss 14 zugeführt, wobei das elektrisch betätigbare Auslassventil 82 in den Expansionsphase auf Durchlass geschaltet wird.

In einem auf den Block 48 folgenden Block 49 wird dann die Druckluft aus dem zweiten Druckluft speichernden Behältnis 32, gegebenenfalls zuvor erwärmt, in Expansionsphasen dem Kompressionsraum 4 des Druckluftkompressors 1 zugeführt.

Sofern in dem Block 41 die dort geprüfte Bedingung nicht erfüllt ist, wird mit einem Block 50 fortgefahren. Dort wird geprüft, ob eine Verzögerungsanforderung vom Fahrzeug vorliegt. Dies kann beispielsweise anhand des über die Datenverbindung 19 empfangenen Motormoments erfolgen. Ist das empfangene Motormoment kleiner als Null, liegt eine Verzögerungsanforderung vor. Das Fahrzeug befindet sich dann in einer Schubphase. Sofern eine Schubphase vorliegt, wird von dem Block 50 zu einem Block 51 verzweigt. In dem Block 51 wird geprüft, ob der Bremskreis-Druckluftbehälter 12 bereits einen Druck aufweist, der einem Maximalwert entspricht oder gegebenenfalls leicht darüber liegt. In diesem Fall wäre keine weitere Druckluft-Befüllung des Bremskreis-Druckluftbehälters 12 sinnvoll. Ist dies jedoch nicht der Fall, wird von dem Block 51 zu einem Block 52 verzweigt. Dort wird der erste Drucklufterzeugungsmodus aktiviert. Andernfalls wird von dem Block 51 zu einem Block 53 verzweigt. Dort wird der zweite Drucklufterzeugungsmodus aktiviert. Hierdurch wird die in der Schubphase vorhandene überschüssige Energie zum Auffüllen des zweiten Druckluft speichernden Behältnisses 32 verwendet. - -

Die in den Block 51 für die Entscheidung, ob der Bremskreis-Druckluftbehälter 12 mit Druckluft befüllt werden soll oder nicht, verwendeten Kriterien können analog zu den beim Block 42 erläuterten Kriterien in Abhängigkeit von der vorausliegenden Topologie der Fahrbahn, der Dauer bis zur nächsten Schubphase, der Länge der Schubphase und vom übrigen Verkehrsgeschehen (Ampel, Stau) abhängig gemacht werden.

Ist die Prüfung im Block 50 negativ, wird von dort zu einem Block 54 verzweigt. Dort wird geprüft, ob der Bremskreis-Druckluftbehälter 12 bereits einen Druck aufweist, der einem Maximalwert entspricht oder gegebenenfalls leicht darüber liegt. Im Block 54 kann z.B. die gleiche Prüfung wie im Block 51 durchgeführt werden. Ist das Ergebnis der Prüfung negativ, wird zu einem Block 55 verzweigt. In diesem wird der erste Drucklufterzeugungsmodus aktiviert. Ist die Prüfung im Block 54 positiv, wird von dort zu einem Block 56 verzweigt. Dort wird geprüft, ob der Druck in dem zweiten Druckluft speichernden Behältnis 32 bereits eine Höchstdruckschwelle er.reicht oder überschritten hat. Ist dies nicht der Fall, wird zu einem Block 57 verzweigt. Dort wird der zweite Drucklufterzeugungsmodus aktiviert. Andernfalls wird von dem Block 56 zu einem Block 58 verzweigt. Dort werden die für ein Einleiten des Umlaufbetriebs erforderlichen Kriterien geprüft, und zwar die Kriterien, die zuvor bereits bezüglich des Blocks 45 erläutert wurden. Sind die Bedingungen für den Umlaufbetrieb nicht erfüllt, wird von dem Block 58 zu einem Block 59 verzweigt. Der Block 59 entspricht in seiner Funktion dem Block 46. Andernfalls wird von dem Block 58 zu einem Block 60 verzweigt. Der Block 60 entspricht in seiner Funktion dem Block 47. Dort wird wiederum der Umlaufbetrieb aktiviert.

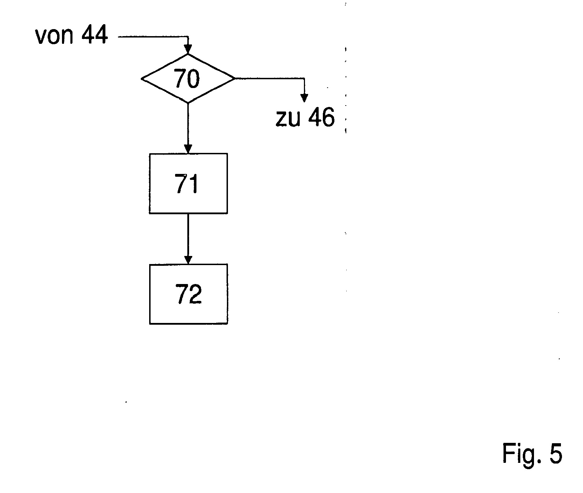

Die Figur 5 zeigt eine vorteilhafte Ergänzungsmöglichkeit des Verfahrensablaufs der Figur 4. Ausgegangen wird von dem Block 44 der Figur 4. Von diesem wird, sofern das Ergebnis der Prüfung im Block 44 positiv ausfällt, nicht direkt zum Block 45 verzweigt, sondern zunächst zu einem Block 70. Dort wird geprüft, ob der Bremsdruck-Druckluftbehälter 12 einen Druck aufweist, der unterhalb eines für die Einleitung des ersten Druckluftexpansionsmodus erforderlichen Druckwerts liegt. Sofern dies der Fall ist, kann der erste Druckluftexpansionsmodus, in dem Druckluft aus dem Bremskreis-Druckluftbehälter zwecks Unterstützung des Antriebsmotors 101 entnommen wird, nicht eingeleitet werden. Daher wird in diesem Fall zu dem Block 45 gemäß Figur 4 verzweigt. Von dort aus läuft der Verfahrensablauf gemäß der Figur 4 fort.

Ist der Druck in dem Bremsdruck-Druckluftbehälter 12 jedoch ausreichend hoch, wird von dem Block 70 zu einem Block 71 verzweigt. Dort ist vorgesehen, dass die Luft im Bremskreis-Druckluftbehälter entweder durch den Wärmetausch-Kreislauf 83, wie in Figur 2 dargestellt, oder durch Durchleiten der Druckluft durch den Wärmetauscher 333 angewärmt wird. Alternativ kann auch direkt die Druckluft aus dem Bremskreis-Druckluftbehälter 12 ohne Erwärmung verwendet werden. Die Druckluft wird dann dem Druckluftkompressor 1 über den Auslassanschluss 14 zugeführt, wobei das elektrisch betätigbare Auslassventil 82 in den Expansionsphase auf Durchlass geschaltet wird. Im Falle des Durchleitens der Druckluft durch den Wärmetauscher 333 wird die Druckluft aus dem Bremskreis-Druckluftbehälter 12 über das erste elektrisch betätigbare Ventil 34 und das dritte elektrisch betätigbare Ventil 36 durch den Wärmetauscher 333 geleitet und dann dem Druckluftkompressor 1 über das vierte elektrisch betätigbare Ventil 37 an dem Einlassanschluss 13 zugeführt.

In einem auf dem Block 71 folgenden Block 72 wird die Druckluft aus dem Bremskreis-Druckluftbehälter 12, gegebenenfalls erwärmt, in Expansionsphasen in den Kompressionsraum 4 des Druckluftkompressors 1 geleitet. Hierbei liegt der erste Druckluftexpansionsmodus vor.

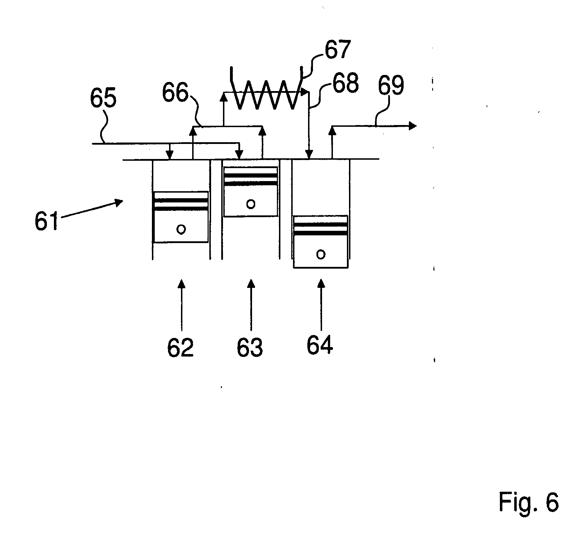

Die Figur 6 zeigt in schematischer Darstellung einen zweistufigen Verdichtungsvorgang anhand eines Dreizylinder-Druckluftkompressors 61. Dargestellt sind eine erste Kolben/Zylinder-Anordnung 62, eine zweite Kolben/Zylinder-Anordnung 63 und eine dritte Kolben/Zylinder-Anordnung 64. Die erste und die zweite Kolben/Zylinder-Anordnung 62, 63 bilden dabei eine erste Verdichtungsstufe. Die dritte Kolben/Zylinder-Anordnung 64 bildet eine zweite Verdichtungsstufe. Es wird in einer Expansionsphase ein Luftstrom in der ersten Verdichtungsstufe angesaugt, wie durch die Pfeile 65 dargestellt. In einer Kompressionsphase wird in der ersten Verdichtungsstufe komprimierte Luft auf einem ersten Druckniveau abgegeben, was in der Figur 6 durch die Pfeile 66 dargestellt ist. Diese komprimierte Luft wird durch einen Kühler 67 geleitet. Der Kühler 67 kann z.B. als in den Zylinderkopf eines Druckluftkompressors integrierte Wasserkühlung ausgebildet sein. Die aus dem Kühler 67 austretende Druckluft wird der zweiten Verdichtungsstufe, d.h. der dritten Kolben/Zylinder-Anordnung 64, zugeführt, wie durch den Pfeil 68 angedeutet. In einer Kompressionsphase gibt die zweite Verdichtungsstufe Druckluft auf einem zweiten Druckniveau ab, wie durch den Pfeil 69 dargestellt. Das zweite Druckniveau ist dabei höher als das erste Druckniveau. Durch den Kühler 67 kann eine zumindest nahezu isotherme zweistufige Verdichtung realisiert werden, die einen besonderes hohen Wirkungsgrad des Betriebs des Dreizylinder-Druckluftkompressors 61 sowohl in den genannten Drucklufterzeugungsmodi als auch in den Druckluftexpansionsmodi gewährleistet. Eine besonders hohe Effizienz ergibt sich insbesondere im dritten Druckluftexpansionsmodus.

## Patentansprüche

1. Verfahren zur Drucksteuerung in einem Fahrzeug (100) mit pneumatischer Bremsanlage (1, 12, 31, 34, 61), wobei das Fahrzeug (100) wenigstens folgendes aufweist:
a) einen Antriebsmotor (101) zur Erzeugung einer Antriebskraft des Fahrzeuges (100),
b) die pneumatische Bremsanlage (1, 12, 31, 34, 61) zur Abbremsung des Fahrzeuges (100), die wenigstens folgendes aufweist:
b1) mehrere Druckluftbremszylinder (31),
b2) eine Druckluftversorgungs- und Speicheranlage (12, 34) mit wenigstens einem ersten Druckluft speichernden Behältnis in Form eines Bremskreis-Druckluftbehälters (12), aus dem ein oder mehrere Druckluftbremszylinder (31) bei einer Abbremsung des Fahrzeuges (100) mit Druckluft beaufschlagt werden,
b3) einen mit dem Antriebsmotor (101) des Fahrzeuges (100) gekoppelten oder koppelbaren Druckluftkompressor (1, 61),
mit den Merkmalen:
c) in einem ersten Drucklufterzeugungsmodus (43, 52, 55) wird in Kompressionsphasen des Druckluftkompressors (1, 61) erzeugte Druckluft von einem Kompressionsraum (4) des Druckluftkompressors (1, 61) in den Bremskreis-Druckluftbehälter (12) geleitet,
d) in einem ersten Druckluftexpansionsmodus (72) wird in Expansionsphasen des Druckluftkompressors (1, 61) Druckluft aus dem Bremskreis-Druckluftbehälter (12) in den Kompressionsraum (4) des Druckluftkompressors (1, 61) geleitet,
e) es ist wenigstens einer oder beide der folgenden weiteren Druckluftexpansionsmodi (47, 49, 60) vorgesehen:
e1) in einem zweiten Druckluftexpansionsmodus (49) wird in Expansionsphasen des Druckluftkompressors (1, 61) Druckluft aus einem zweiten Druckluft speichernden Behältnis (32) in den Kompressionsraum (4) des Druckluftkompressors (1, 61) geleitet,
e2) in einem dritten Druckluftexpansionsmodus wird in Expansionsphasen des Druckluftkompressors Druckluft aus einem dritten Druckluft speichernden Behältnis (33) in den Kompressionsraum (4) des Druckluftkompressors (1, 61) geleitet

2. Verfahren nach Anspruch 1, **dadurch gekennzeichnet, dass** in einer ersten Schubphase im Betrieb des Fahrzeuges (100) der Druckluftkompressor (1, 61) im ersten Drucklufterzeugungsmodus (43, 52, 55) betrieben wird.

3. Verfahren nach Anspruch 1 oder 2, **dadurch gekennzeichnet, dass** in einem zweiten Drucklufterzeugungsmodus (53, 57) in Kompressionsphasen des Druckluftkompressors (1, 61) erzeugte Druckluft von dem Kompressionsraum (4) des Druckluftkompressors (1, 61) in das zweite Druckluft speichernde Behältnis (32) geleitet wird.

4. Verfahren nach Anspruch 3, **dadurch gekennzeichnet, dass** in einer zweiten Schubphase im Betrieb des Fahrzeuges (100) der Druckluftkompressor (1, 61) im zweiten Drucklufterzeugungsmodus (53, 57) betrieben wird.

5. Verfahren nach Anspruch 3 oder 4, **dadurch gekennzeichnet, dass** ein Betrieb im zweiten Drucklufterzeugungsmodus (53, 57) nur dann erfolgt, wenn in dem Bremskreis-Druckluftbehälter (12) ein vorbestimmter Mindestdruck vorhanden ist oder der Bremskreis-Druckluftbehälter (12) bis zu seinem Maximaldruck befüllt ist.

6. Verfahren nach einem der vorhergehenden Ansprüche, **dadurch gekennzeichnet, dass** das zweite Druckluft speichernde Behältnis (32) ein zusätzlicher Druckluftbehälter ist, der von dem Bremskreis-Druckluftbehälter (12) entkoppelt ist.

7. Verfahren nach einem der vorhergehenden Ansprüche, **dadurch gekennzeichnet, dass** das dritte Druckluft speichernde Behältnis (33) ein Wärmetauscher (333) ist, der im dritten Druckluftexpansionsmodus (47, 60) eingangsseitig mit von dem Druckluftkompressor (1, 61) in den Kompressionsphasen abgegebener Druckluft befüllt wird, während ausgangsseitig des Wärmetauschers (333) erwärmte Druckluft dem Kompressionsraum (4) des Druckluftkompressors (1, 61) in den Expansionsphasen wieder zugeführt wird.

8. Verfahren nach einem der vorhergehenden Ansprüche, **dadurch gekennzeichnet, dass** die von dem Druckluftkompressor (1, 61) in den Kompressionsphasen ausgangsseitig abgegebene Druckluft in einem mehrstufigen Verdichtungsprozess erzeugt wird.

9. Verfahren nach Anspruch 8, **dadurch gekennzeichnet, dass** zwischen wenigstens zwei Verdichtungsstufen (62, 63, 64) des mehrstufigen Verdichtungsprozesses die Druckluft durch einen Kühler (67) geleitet wird, in dem die Drucklufttemperatur verringert wird.

10. Verfahren nach einem der vorhergehenden Ansprüche, **dadurch gekennzeichnet, dass** ein Betrieb im dritten Druckluftexpansionsmodus (47, 60) nur dann erfolgt, wenn in dem Bremskreis-Druckluftbehälter (12) ein vorbestimmter Mindestdruck vorhanden ist oder der Bremskreis-Druckluftbehälter (12) bis zu seinem Maximaldruck befüllt ist.

11. Verfahren nach einem der vorhergehenden Ansprüche, **dadurch gekennzeichnet, dass** ein Betrieb im dritten Druckluftexpansionsmodus (47, 60) nur dann erfolgt, wenn in dem zweiten Druckluft speichernden Behältnis (32) ein vorbestimmter Mindestdruck vorhanden ist oder das zweite Druckluft speichernde Behältnis (32) bis zu seinem Maximaldruck befüllt ist.

12. Verfahren nach einem der vorhergehenden Ansprüche, **dadurch gekennzeichnet, dass** in einer Phase mit einem Antriebskraft-Bedarf im Betrieb des Fahrzeuges (100) entweder, soweit vorhanden, der erste Druckluftexpansionsmodus (72), der zweite Druckluftexpansionsmodus (49) oder der dritte Druckluftexpansionsmodus (47, 60) aktiviert wird, wobei der zweite Druckluftexpansionsmodus (49) vorrangig vor dem ersten Druckluftexpansionsmodus (72) aktiviert wird und der zweite Druckluftexpansionsmodus (49) vorrangig vor dem dritten Druckluftexpansionsmodus (47, 60) aktiviert wird.

13. Verfahren nach einem der vorhergehenden Ansprüche, **dadurch gekennzeichnet, dass** bei Erreichen oder Unterschreiten einer Mindestdruckschwelle des Drucks in dem Bremskreis-Druckluftbehälter (12) vor dem Einleiten des ersten Drucklufterzeugungsmodus (43, 52, 55) durch die Auswertung von Satellitennavigationsinformationen und digitalen Kartendaten geprüft wird, ob anhand eines unmittelbar voraus liegenden Fahrbahnabschnitts eine bevorstehende Schubphase im Betrieb des Fahrzeugs (100) erkennbar ist, und bei Erkennung einer bevorstehenden Schubphase die Einleitung des ersten Drucklufterzeugungsmodus (43, 52, 55) so lange verzögert wird, bis die bevorstehende Schubphase eintritt.

14. Verfahren nach Anspruch 13, **dadurch gekennzeichnet, dass** die Verzögerung der Einleitung des ersten Drucklufterzeugungsmodus (43, 52, 55) abgebrochen wird und der erste Drucklufterzeugungsmodus (43, 52, 55) eingeleitet wird, wenn der Druck in dem Bremskreis-Druckluftbehälter (12) eine untere Grenzdruckschwelle erreicht oder unterschreitet, die unterhalb der Mindestdruckschwelle liegt.

15. Verfahren nach einem der vorhergehenden Ansprüche, **dadurch gekennzeichnet, dass** in dem zweiten Drucklufterzeugungsmodus (53, 57) bei Erreichen oder Überschreiten einer Höchstdruckschwelle des Drucks in dem zweiten Druckluft speichernden Behältnis (32) durch die Auswertung von Satellitennavigationsinformationen und digitalen Kartendaten geprüft wird, ob eine aktuelle Schubphase unter Berücksichtigung eines unmittelbar voraus liegenden Fahrbahnabschnitts noch für eine Mindestdauer vorliegt, und wenn diese Bedingung erfüllt ist, der Druckluftkompressor (1, 61) im zweiten Drucklufterzeugungsmodus (53, 57) weiter betrieben wird, bis die aktuelle Schubphase beendet ist oder der Druck in dem zweiten Druckluft speichernden Behältnis (32) eine obere Grenzdruckschwelle erreicht oder überschreitet, die oberhalb der Höchstdruckschwelle liegt.

16. Drucksteuereinrichtung (18, 34, 35, 36, 37, 81, 82) für ein Fahrzeug (100) mit einer pneumatischen Bremsanlage, wobei das Fahrzeug wenigstens folgendes aufweist:
a) einen Antriebsmotor (101) zur Erzeugung einer Antriebskraft des Fahrzeuges (100),
b) die pneumatische Bremsanlage (1, 12, 31, 34, 61) zur Abbremsung des Fahrzeuges (100), die wenigstens folgendes aufweist:
b1) mehrere Druckluftbremszylinder (31),
b2) eine Druckluftversorgungs- und Speicheranlage (12, 34) mit wenigstens einem ersten Druckluft speichernden Behältnis in Form eines Bremskreis-Druckluftbehälters (12), aus dem ein oder mehrere Druckluftbremszylinder (31) bei einer Abbremsung des Fahrzeuges (100) mit Druckluft beaufschlagt werden,
b3) einen mit dem Antriebsmotor (101) des Fahrzeuges (100) gekoppelten oder koppelbaren Druckluftkompressor (1, 61),
wobei die Drucksteuereinrichtung (18, 34, 35, 36, 37, 81, 82) wenigstens ein elektronisches Steuergerät (18) und wenigstens eine von dem elektronischen Steuergerät (18) steuerbare Ventileinrichtung (34, 35, 36, 37, 81, 82) zur steuerbaren Verbindung des Kompressionsraums (4) des Druckluftkompressors (1, 61) mit dem Bremskreis-Druckluftbehälter (12) und wenigstens einem oder beiden der zweiten und dritten Druckluft speichernden Behältnisse (32, 33) aufweist, wobei das elektronische Steuergerät (18) ein Steuerprogramm aufweist, dass eingerichtet ist zur Ausführung eines Verfahrens nach einem der vorhergehenden Ansprüche.

## Claims

1. Method for controlling pressure in a vehicle (100) with a pneumatic brake system (1, 12, 31, 34, 61), wherein the vehicle (100) comprises at least the following:
a) a drive motor (101) to generate a drive power of the vehicle (100),
b) the pneumatic brake system (1, 12, 31, 34, 61) for braking the vehicle (100) and comprising at least the following:
b1) several compressed-air brake cylinders (31),
b2) a compressed-air supply and storage assembly (12, 34) with at least one first compressed-air storage container in the form of a brake circuit compressed-air container (12), from which one or more compressed-air brake cylinders (31) are pressurized with compressed air on braking of the vehicle (100),
b3) an air compressor (1, 61) which is or can be coupled with the drive motor (101) of the vehicle (100),
with the features:
c) in a first compressed-air generating mode (43, 52, 55), compressed air generated in compression phases of the air compressor (1, 61) is conducted from a compression chamber (4) of the air compressor (1, 61) into the brake circuit compressed-air container (12),
d) in a first compressed-air expansion mode (72), in expansion phases of the air compressor (1, 61), compressed air is conducted from the brake circuit compressed-air container (12) to the compression chamber (4) of the air compressor (1, 61),
e) at least one or both of the following further compressed-air expansion modes (47, 49, 60) are provided:
e1) in a second compressed-air expansion mode (49), in expansion phases of the air compressor (1, 61), compressed air is conducted from a second compressed-air storage container (32) into the compression chamber (4) of the air compressor (1, 61),
e2) in a third compressed-air expansion mode, in expansion phases of the air compressor, compressed air is conducted from a third compressed-air storage container (33) into the compression chamber (4) of the air compressor (1, 61).

2. Method according to Claim 1, **characterized in that** in a first overrun phase in operation of the vehicle (100), the air compressor (1, 61) is operated in a first compressed-air generating mode (43, 52, 55).

3. Method according to Claim 1 or 2, **characterized in that** in a second compressed-air generating mode (53, 57), compressed air generated in compression phases of the air compressor (1, 61) is conducted from the compression chamber (4) of the air compressor (1, 61) into the second compressed-air storage container (32).

4. Method according to Claim 3, **characterized in that** in a second overrun phase in operation of the vehicle (100), the air compressor (1, 61) is operated in the second compressed-air generating mode (53, 57).

5. Method according to Claim 3 or 4, **characterized in that** operation in the second compressed-air generating mode (53, 57) occurs only when a predefined minimum pressure is present in the brake circuit compressed-air container (12) or when the brake circuit compressed-air container (12) is filled to its maximum pressure.

6. Method according to any of the preceding claims, **characterized in that** the second compressed-air storage container (32) is an additional compressed-air container which is decoupled from the brake circuit compressed-air container (12).

7. Method according to any of the preceding claims, **characterized in that** the third compressed-air storage container (33) is a heat exchanger (333) which in the third compressed-air expansion mode (47, 60) on the input side is filled with compressed air which is output from the air compressor (1, 61) in the compression phases, while on the output side of the heat exchanger (333) heated compressed air is supplied back to the compression chamber (4) of the air compressor (1, 61) in the expansion phases.

8. Method according to any of the preceding claims, **characterized in that** the compressed air output from the air compressor (1, 61) on the output side in the compression phases is generated in a multistage compression process.

9. Method according to Claim 8, **characterized in that** between at least two compression stages (62, 63, 64) of the multistage compression process, the compressed air is conducted through a cooler (67) in which the compressed-air temperature is reduced.

10. Method according to any of the preceding claims, **characterized in that** operation in the third compressed-air expansion mode (47, 60) takes place only when a predefined minimum pressure is present in the brake circuit compressed-air container (12) or when the brake circuit compressed-air container (12) is filled to its maximum pressure.

11. Method according to any of the preceding claims, **characterized in that** operation in the third compressed-air expansion mode (47, 60) takes place only when a predefined minimum pressure is present in the second compressed-air storage container (32) or when the second compressed-air storage container (32) is filled to its maximum pressure.

12. Method according to any of the preceding claims, **characterized in that** in a phase with a demand for drive power in operation of the vehicle (100), where present either the first compressed-air expansion mode (72), the second compressed-air expansion mode (49) or the third compressed-air expansion mode (47, 60) is activated, wherein the second compressed-air expansion mode (49) is activated as priority before the first compressed-air expansion mode (72), and the second compressed-air expansion mode (49) is activated as priority before the third compressed-air expansion mode (47, 60).

13. Method according to any of the preceding claims, **characterized in that** when the pressure in the brake circuit compressed-air container (12) reaches or falls below a minimum pressure threshold, before initiating the first compressed-air generating mode (43, 52, 55), by analysis of satellite navigation information and digital map data it is checked whether, on the basis of a road section immediately ahead, an impending overrun phase in operation of the vehicle (100) can be detected and if an impending overrun phase is detected, the initiation of the first compressed-air generating mode (43, 52, 55) is delayed until the impending overrun phase occurs.

14. Method according to Claim 13, **characterized in that** the delay in initiation of the first compressed-air generating mode (43, 52, 55) is interrupted and the first compressed-air generating mode (43, 52, 55) is initiated if the pressure in the brake circuit compressed-air container (12) reaches or falls below a lower limit pressure threshold which lies below the minimum pressure threshold.

15. Method according to any of the preceding claims, **characterized in that** in the second compressed-air generating mode (53, 57), when the pressure in the second compressed-air storage container (32) reaches or exceeds a maximum pressure threshold, by analysis of satellite navigation information and digital map data it is checked whether, taking into account a road section immediately ahead, a current overrun phase will persist for a minimum duration, and if this condition is fulfilled, the air compressor (1, 61) continues to operate in the second compressed-air generating mode (53, 57) until the current overrun phase is ended or the pressure in the second compressed-air storage container (32) reaches or exceeds an upper limit pressure threshold which lies above the maximum pressure threshold.

16. Pressure control device (18, 34, 35, 36, 37, 81, 82) for a vehicle (100) with a pneumatic brake system, wherein the vehicle comprises at least the following:
a) a drive motor (101) to generate a drive power of the vehicle (100),
b) the pneumatic brake system (1, 12, 31, 34, 61) for braking the vehicle (100) and comprising at least the following:
b1) several compressed-air brake cylinders (31),
b2) a compressed-air supply and storage assembly (12, 34) with at least one first compressed-air storage container in the form of a brake circuit compressed-air container (12), from which one or more compressed-air brake cylinders (31) are pressurized with compressed air on braking of the vehicle (100),
b3) an air compressor (1, 61) which is or can be coupled with the drive motor (101) of the vehicle (100),
wherein the pressure control device (18, 34, 35, 36, 37, 81, 82) comprises at least one electronic control unit (18) and at least one valve device (34, 35, 36, 37, 81, 82) which can be controlled by the electronic control unit (18) for controllable connection of the compression chamber (4) of the air compressor (1, 61) to the brake circuit compressed-air container (12) and to at least one or both of the second and third compressed-air storage containers (32, 33), wherein the electronic control unit (18) has a control program which is configured to perform a method according to any of the preceding claims.

## Revendications

1. Procédé de commande de pression dans un véhicule (100) comprenant une installation de freinage pneumatique (1, 12, 31, 34, 61), le véhicule (100) présentant au moins ce qui suit :
a) un moteur d'entraînement (101) pour générer une force d'entraînement du véhicule (100),
b) l'installation de freinage pneumatique (1, 12, 31, 34, 61) pour freiner le véhicule (100), qui présente au moins ce qui suit :
b1) plusieurs cylindres de freinage à air comprimé (31),
b2) une installation d'alimentation et de stockage d'air comprimé (12, 34) avec au moins un premier récipient stockant de l'air comprimé sous la forme d'un récipient d'air comprimé de circuit de freinage (12) à partir duquel un ou plusieurs cylindres de freinage à air comprimé (31) sont sollicités avec de l'air comprimé lors d'un freinage du véhicule (100),
b3) un compresseur d'air comprimé (1, 61) accouplé ou pouvant être accouplé au moteur d'entraînement (101) du véhicule (100),
comprenant les caractéristiques suivantes :
c) dans un premier mode de génération d'air comprimé (43, 52, 55), de l'air comprimé généré dans des phases de compression du compresseur d'air comprimé (1, 61) est guidé depuis un espace de compression (4) du compresseur d'air comprimé (1, 61) dans le récipient d'air comprimé de circuit de freinage (12),
d) dans un premier mode d'expansion d'air comprimé (72), de l'air comprimé est guidé, dans des phases d'expansion du compresseur d'air comprimé (1, 61), hors du récipient d'air comprimé de circuit de freinage (12) dans l'espace de compression (4) du compresseur d'air comprimé (1, 61),
e) au moins un ou les deux des modes d'expansion d'air comprimé supplémentaires suivants (47, 49, 60) sont prévus :
e1) dans un deuxième mode d'expansion d'air comprimé (49), de l'air comprimé, dans des phases d'expansion du compresseur d'air comprimé (1, 61), est guidé depuis un deuxième récipient stockant de l'air comprimé (32) dans l'espace de compression (4) du compresseur d'air comprimé (1, 61),
e2) dans un troisième mode d'expansion d'air comprimé, dans des phases d'expansion du compresseur d'air comprimé, de l'air comprimé est guidé depuis un troisième récipient stockant de l'air comprimé (33) dans l'espace de compression (4) du compresseur d'air comprimé (1, 61).

2. Procédé selon la revendication 1, **caractérisé en ce que** dans une première phase de poussée pendant le fonctionnement du véhicule (100), le compresseur d'air comprimé (1, 61) fonctionne dans le premier mode de génération d'air comprimé (43, 52, 55).

3. Procédé selon la revendication 1 ou 2, **caractérisé en ce que** dans un deuxième mode de génération d'air comprimé (53, 57), de l'air comprimé généré dans des phases de compression du compresseur d'air comprimé (1, 61) est guidé depuis l'espace de compression (4) du compresseur d'air comprimé (1, 61) dans le deuxième récipient stockant de l'air comprimé (32).

4. Procédé selon la revendication 3, **caractérisé en ce que** dans une deuxième phase de poussée, pendant le fonctionnement du véhicule (100), le compresseur d'air comprimé (1, 61) fonctionne dans le deuxième mode de génération d'air comprimé (53, 57).

5. Procédé selon la revendication 3 ou 4, **caractérisé en ce qu'**un fonctionnement dans le deuxième mode de génération d'air comprimé (53, 57) n'a lieu que lorsqu'une pression minimale prédéterminée existe dans le récipient d'air comprimé de circuit de freinage (12) ou que le récipient d'air comprimé de circuit de freinage (12) est rempli jusqu'à sa pression maximale.

6. Procédé selon l'une quelconque des revendications précédentes, **caractérisé en ce que** le deuxième récipient stockant de l'air comprimé (32) est un récipient d'air comprimé supplémentaire qui est désaccouplé du récipient d'air comprimé de circuit de freinage (12).

7. Procédé selon l'une quelconque des revendications précédentes, **caractérisé en ce que** le troisième récipient stockant de l'air comprimé (33) est un échangeur de chaleur (333) qui, dans le troisième mode d'expansion d'air comprimé (47, 60), est rempli du côté de l'entrée avec de l'air comprimé distribué par le compresseur d'air comprimé (1, 61) dans les phases de compression, tandis que de l'air comprimé chauffé du côté de la sortie de l'échangeur de chaleur (333) est à nouveau acheminé à l'espace de compression (4) du compresseur d'air comprimé (1, 61) dans les phases d'expansion.

8. Procédé selon l'une quelconque des revendications précédentes, **caractérisé en ce que** l'air comprimé distribué par le compresseur d'air comprimé (1, 61) du côté de la sortie dans les phases de compression est généré dans un processus de compression à plusieurs étages.

9. Procédé selon la revendication 8, **caractérisé en ce qu'**entre au moins deux étages de compression (62, 63, 64) du processus de compression à plusieurs étages, l'air comprimé est guidé à travers un radiateur (67) dans lequel la température de l'air comprimé est réduite.

10. Procédé selon l'une quelconque des revendications précédentes, **caractérisé en ce qu'**un fonctionnement dans le troisième mode d'expansion d'air comprimé (47, 60) n'a lieu que lorsqu'une pression minimale prédéterminée existe dans le récipient d'air comprimé de circuit de freinage (12) ou que le récipient d'air comprimé de circuit de freinage (12) est rempli jusqu'à sa pression maximale.

11. Procédé selon l'une quelconque des revendications précédentes, **caractérisé en ce qu'**un fonctionnement dans le troisième mode d'expansion d'air comprimé (47, 60) n'a lieu que lorsqu'une pression minimale prédéterminée existe dans le deuxième récipient stockant de l'air comprimé (32) ou que le deuxième récipient stockant de l'air comprimé (32) est rempli jusqu'à sa pression maximale.

12. Procédé selon l'une quelconque des revendications précédentes, **caractérisé en ce que** dans une phase avec un besoin de force d'entraînement pendant le fonctionnement du véhicule (100), dans la mesure où ils sont présents, le premier mode d'expansion d'air comprimé (72), le deuxième mode d'expansion d'air comprimé (49), ou le troisième mode d'expansion d'air comprimé (47, 60) sont activés, le deuxième mode d'expansion d'air comprimé (49) étant activé en priorité avant le premier mode d'expansion d'air comprimé (72) et le deuxième mode d'expansion d'air comprimé (49) étant activé en priorité avant le troisième mode d'expansion d'air comprimé (47, 60).

13. Procédé selon l'une quelconque des revendications précédentes, **caractérisé en ce qu'**à l'obtention ou en dessous d'un seuil de pression minimale de la pression dans le récipient d'air comprimé de circuit de freinage (12), avant le lancement du premier mode de génération d'air comprimé (43, 52, 55), on vérifie, par l'analyse d'informations de navigation par satellite et de données de cartes numériques, si une phase de poussée imminente peut être détectée dans le fonctionnement du véhicule (100) par le biais d'une section de la route située directement en avant, et si une phase de poussée imminente est reconnue, le lancement du premier mode de génération d'air comprimé (43, 52, 55) est retardé jusqu'au commencement de la phase de poussée imminente.

14. Procédé selon la revendication 13, **caractérisé en ce que** le retard du lancement du premier mode de génération d'air comprimé (43, 52, 55) est interrompu et le premier mode de génération d'air comprimé (43, 52, 55) est lancé si la pression dans le récipient d'air comprimé de circuit de freinage (12) atteint un seuil de pression limite inférieur ou descend en dessous de celui-ci, lequel seuil est inférieur au seuil de pression minimale.

15. Procédé selon l'une quelconque des revendications précédentes, **caractérisé en ce que** dans le deuxième mode de génération d'air comprimé (53, 57), à l'obtention ou au-dessus d'un seuil de pression maximale de la pression dans le deuxième récipient stockant de l'air comprimé (32), on vérifie par l'analyse d'informations de navigation par satellite et de données de cartes numériques si une phase de poussée actuelle existe encore pendant une durée minimale en tenant compte d'une section de la route située directement en avant, et si cette condition est satisfaite, le compresseur d'air comprimé (1, 61) continue de fonctionner dans le deuxième mode de génération d'air comprimé (53, 57) jusqu'à ce que la phase de poussée actuelle soit terminée ou que la pression dans le deuxième récipient stockant de l'air comprimé (32) ait atteint ou dépassé un seuil de pression limite supérieur, qui se situe au-dessus du seuil de pression maximale.

16. Dispositif de commande de pression (18, 34, 35, 36, 37, 81, 82) pour un véhicule (100) comprenant une installation de freinage pneumatique, le véhicule présentant au moins ce qui suit :
a) un moteur d'entraînement (101) pour générer une force d'entraînement du véhicule (100),
b) l'installation de freinage pneumatique (1, 12, 31, 34, 61) pour freiner le véhicule (100), qui présente au moins ce qui suit :
b1) plusieurs cylindres de freinage à air comprimé (31),
b2) une installation d'alimentation et de stockage d'air comprimé (12, 34) avec au moins un premier récipient stockant de l'air comprimé sous la forme d'un récipient d'air comprimé de circuit de freinage (12) à partir duquel un ou plusieurs cylindres de freinage à air comprimé (31) sont sollicités avec de l'air comprimé lors d'un freinage du véhicule (100),
b3) un compresseur d'air comprimé (1, 61) accouplé ou pouvant être accouplé au moteur d'entraînement (101) du véhicule (100),
le dispositif de commande de pression (18, 34, 35, 36, 37, 81, 82) présentant au moins un appareil de commande électronique (18) et au moins un dispositif de soupape (34, 35, 36, 37, 81, 82) pouvant être commandé par l'appareil de commande électronique (18) pour la connexion commandable de l'espace de compression (4) du compresseur d'air comprimé (1, 61) au récipient d'air comprimé de circuit de freinage (12) et à au moins un ou aux deux des deuxième et troisième récipients stockant de l'air comprimé (32, 33), l'appareil de commande électronique (18) présentant un programme de commande qui est prévu pour mettre en oeuvre un procédé selon l'une quelconque des revendications précédentes.
